# EUROPEAN PATENT SPECIFICATION

(11) **EP 0 862 847 B1**
(45) Date of publication and mention of the grant of the patent: **02.06.1999**
(21) Application number: 97830098.6
(22) Date of filing: 06.03.1997
(51) Int. Cl.: A01D 51/00

(54) **Sucking device for picking products such as chestnuts, hazelnuts and the like**
Vorrichtung zum Sammlen von Produkten wie Kastanien, Haselnüsse
Dispositif aspirateur pour le ramassage de produits tels que châtaignes, noisettes et analogues

(43) Date of publication of application: 09.09.1998
(73) Proprietor: Cifarelli S.r.l., 27058 Voghera (Pavia) (IT)
(72) Inventor: Cifarelli, Raffaele, 27058 Voghera (Pavia) (IT)
(74) Representative: Sutto, Luca

(56) References cited:
- FR-A- 1 277 258
- FR-A- 1 390 650
- FR-A- 2 002 650
- FR-A- 2 590 112
- FR-A- 2 713 040
- US-A- 2 781 625
- US-A- 3 352 094
- US-A- 3 808 785

## Description

The present invention relates to a sucking device for picking products such as chestnuts and hazelnuts.

Obviously, the sucking device in question will be adapted for use in picking any kind of bodies or products having sizes and mass substantially of the same conformation as the above mentioned ones. In particular, the device in question may be also used for easily carrying out picking of olives, walnuts, acorns, pistachios and others.

It is known that sucking devices presently employed for picking chestnuts, hazelnuts and the like are capable of operating in an automatic manner and enable work to be done at much higher rates that manual picking.

Devices presently on the market comprise a housing inside which a collecting receptacle for chestnuts or other products of the same kind is defined, as well as a feeding channel enabling sucking of the products to be picked. An air stream under suction is generated by a conventional powered fan which is suitably sized so as to define a sufficient sucking for product picking, but capable of avoiding possible undesired bodies such as, typically, stones having sizes and weight higher than a given threshold, being swallowed up.

Clearly, in spite of the above, sucking of chestnuts, hazelnuts or others inevitably causes light bodies such as leaves, grass and the like or in any case bodies of a mass similar to that of the products to be picked, typically gravel or stones of reduced sizes, to be drawn in within the housing.

Practically, in known devices selectivity under suction often relies exclusively on the device's incapability of sucking bodies having an excessive mass and/or size, whereas all bodies of mass and size lower than a given value are irreparably drawn in within the housing.

In other words, not all the sucking devices presently on the market, although conveniently sized, are able to carry out a good separation of the picked products from leaves, grass or other goods as well as to to completely prevent undesired bodies such as stones and gravel from reaching the inside of the collecting area.

Due to the above, manual operations for cleaning and separating the different goods are required in a subsequent step, which brings about down tire and additional costs.

Documents FR-2713040-A and FR-2590112-A each disclose a sucking device for picking products such as chestnuts, having a housing inside which a collecting receptacle is defined.

A feeding channel associated with the housing at an inlet opening enables sucking of the products to be picked. In the feeding channel an air stream under suction is generated by a conventional powered fan.

The device of FR-2713040-A also comprises a diverting member having an active surface facing the inlet disposed in slanting configuration above the receptacle. The products are sucked by the air stream through the feeding channel and brought to the diverting member, which deflects light elements (e.g. leaves) away, while letting higher elements reach the housing.

In FR-2590112-A, the products sucked into the housing fall towards a grating element where they are separated from undesired bodies such as stones. Light-in-weight undesired bodies not carried down by the products are sucked towards the fan.

It is a fundamental object of the present invention to provide sucking device capable of greatly improving cleaning of the picked products, in particular the efficiency of their separation from light-in-weight undesired bodies.

Preferential object of the invention is to provide a sucking device that while greatly efficient from the point of view of selection, does not lose efficacy in the sucking rates neither does it involve too high construction costs.

Finally, the present invention should preferably provide a sucking device in which stones, gravel or other solid debris possibly sucked by the feeding channel and physically separated from the products to be collected can be easily discharged, upon command, by the user.

The foregoing and further objects that will become more apparent in the following description are substantially achieved by a sucking device for picking products such as chestnuts and hazelnuts in accordance with that which is set forth in the accompanying claims.

Further features and advantages will be best understood from the detailed description of some preferred but non-exclusive embodiments of a sucking device in accordance with the present invention, given hereinafter by way of non-limiting example, with reference to the accompanying drawings, in which:
- Figs. 1 and 2 are fragmentary cross-sectional views of two alternative embodiments of the device in question;
- Fig. 3 shows a grating element associated with the device in Fig. 1 and seen along line III-III in Fig. 1;
- Figs. 4 and 5 are diagrammatic views showing drive means for doors associated with the device in Fig. 1 and the device in Fig. 2, respectively.

With reference to the drawings, a sucking device in accordance with the invention has been generally identified by reference numeral 1.

The sucking device 1 conventionally comprises a housing 2 that, in this case, preferably has a substantially cylindrical conformation. Housing 2 is provided, at one lower portion 2a thereof for example, with a collecting receptacle or container 3 for receiving the products to be collected such as chestnuts, hazelnuts, acorns, olives, or still other products of similar sizes and consistency. The lower portion 2a is provided with a closure member 3a displaceable from a closed position in which it defines receptacle 3 to a spaced apart position in which it enables the products to be discharged to the outside.

The products to be picked are sucked through a feeding channel 4 of tubular conformation which has one end, through which the products to be collected enter, and a second end operatively associated with housing 2 at an inlet opening 5 formed in said housing and placed above the collecting receptacle 3.

Due to the presence of generator means 6 capable of giving rise to a suction stream through the feeding channel 4, said channel is capable of swallowing the products to be collected and sending them to the collecting receptacle 3. Said suction stream generator means consists of a conventional powered fan preferably located on top of the housing and not shown because known per se and conventional.

The sucking device 1 also comprises selector means 7 operatively interposed between the inlet opening 5 formed in housing 2 and the collecting receptacle 3 so as to separate the products to be collected from undesired bodies such as stones or gravel possibly drawn in through the feeding channel 4.

In more detail, the selector means comprises at least one grating element 8 positioned at the lower portion of said inlet opening 5 and provided with shaped orifices 9 so as to enable a selective passage of those undesired bodies towards a separation space 10 and, on the contrary, inhibit the products to be collected from moving to said space. More particularly, the grating element 8 has conveniently-sized orifices 9 so as to enable passage of stones or gravel which normally have smaller sizes than products such as chestnuts, acorns and olives, the mass being the same.

The grating element 8 also defines an operating path of travel for the products to be collected that are diverted towards said collecting receptacle.

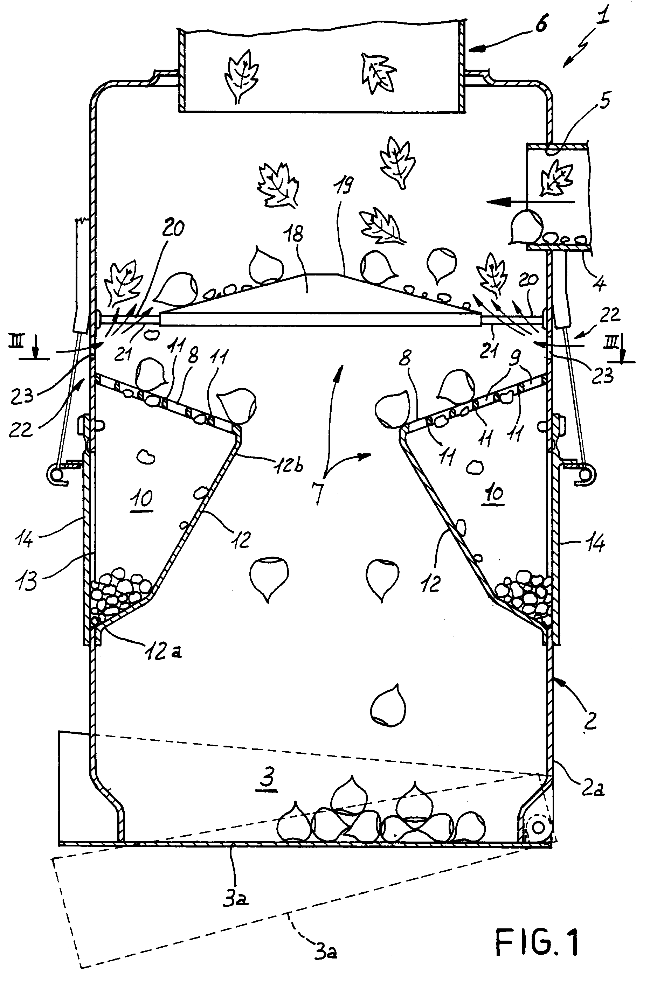

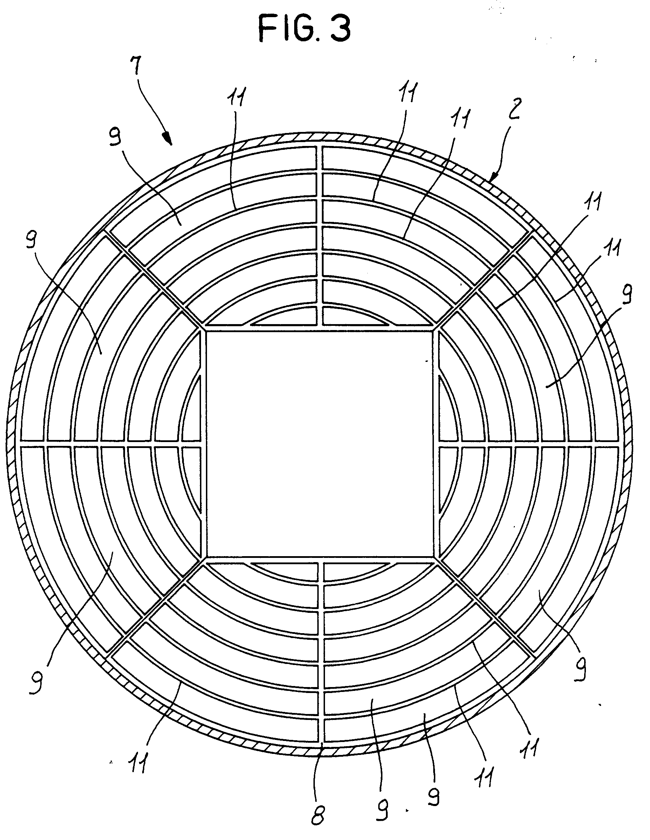

For the purpose, the grating element 8 is slanting downwardly moving along said operating path of travel so as to enable drop under gravity of both the products (towards the collecting receptacle) and the undesired bodies, if any (towards the separation space or spaces). In more detail, the grating element 8 is defined by strip-like rungs 11 parallelly spaced apart from each other and disposed at differentiated heights in a stepwise conformation (see Figs. 1, 2 and 3) so as to divert stones towards the separation space, while simultaneously dropping the products towards the collecting receptacle.

In the embodiment shown rungs are in the form of an arc of a circumference and, as a result, orifices are embodied by concentric annuli.

It is to be noted that the separation space is defined below the grating element and, preferably, extends along a predetermined circumferential band at the side wall of the housing.

From a constructional point of view, two possible solutions are described herebelow.

In accordance with a first preferential solution, shown in Figs. 1, 3 and 4, the grating element is provided to comprise a predetermined number of portions, four for example, of the same angular extension internally associated with the housing side wall and disposed in side by side relation with respect to each other. The grating element portions are then each positioned over a respective separation space defined by a partition 12. More specifically, as clearly shown in Fig. 1, each of the above mentioned partitions has an operating edge 12a in engagement with a corresponding discharge opening 13 formed in the housing side wall. Said partition, at an upper edge 12b thereof also defines an appropriate engagement area for the corresponding portion of the grating element.

It is to be noted that at the discharge openings 13 formed in the housing side wall there are doors 14, each shiftable from a closure position, in which they define the separation space in cooperation with the respective partition 12, to an open position in which they enable undesired bodies present in each space to be discharged to the outside.

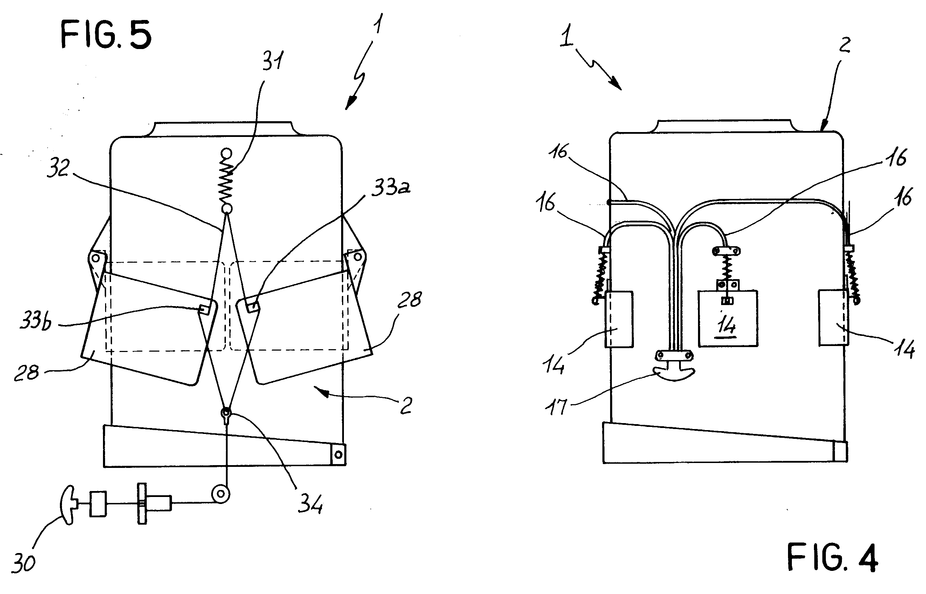

It is also to be noted that for operating the opening and closure of said doors 14, drive means is provided which consists of a predetermined number of cables 16 (in this case four cables), as shown in Fig. 4, each of them having one end fixed to the corresponding door and a second end connected to a gripping element 17 to be activated by pulling by a user. Practically, the gripping element 17 is rigidly connected to the second end of each of the cables, so that by exerting a pulling action on the gripping element the different cables can move doors 14, normally closed, to said open position, by a simultaneous operation.

In order to hold doors 14 in the closed position, provision is made for spring means directly active on doors themselves or said cables.

Still in accordance with the invention, it is to be noted that the selector means further comprises a diverting member 18 having an active surface 19 disposed over the grating element to cause movement of the sucked products and undesired bodies from the feeding channel to the grating element itself. Practically, the diverting member acts at a central position in the housing and has its active surface in a slanting configuration so as to move the sucked material to a radially external area where a perimetric passage 20 is provided which exends in a substantial-superposition relationship with the grating element 8. In this way, the sucked material that by itself would tend to reach a substantially central area of the housing, is diverted by the active surface of the diverting member towards orifices 9 of the grating element.

It is to be noted that in this case the diverting member is defined by a substantially disc-shaped body having an active surface of conical conformation and radial spokes 21 for engagement with the side surface of the housing.

The device further comprises auxiliary air feeding means 22 adapted to operate on the housing side wall close to the second end of the feeding channel or the inlet opening.

The air feeding means is so shaped as to define an air stream transversely exerting a blowing action across the material sucked into the housing from the feeding channel. In this manner, possible flying or sufficiently light-in-weight bodies such as grass, powder, leaves and others can be diverted to the generator means 6 and then discharged to the outside. It is to be noted that said auxiliary feeding means is preferably defined by a predetermined number of openings 23 formed in the housing side wall and extending at angularly spaced apart positions from each other in a predetermined plane preferably located under the inlet opening and the active surface.

Cooperation of the diverting element with the auxiliary air feeding means is particularly efficient because this diverting element enables the sucked material to stay over the auxiliary openings a sufficient time in order to cause substantial removal of all flying bodies, if any.

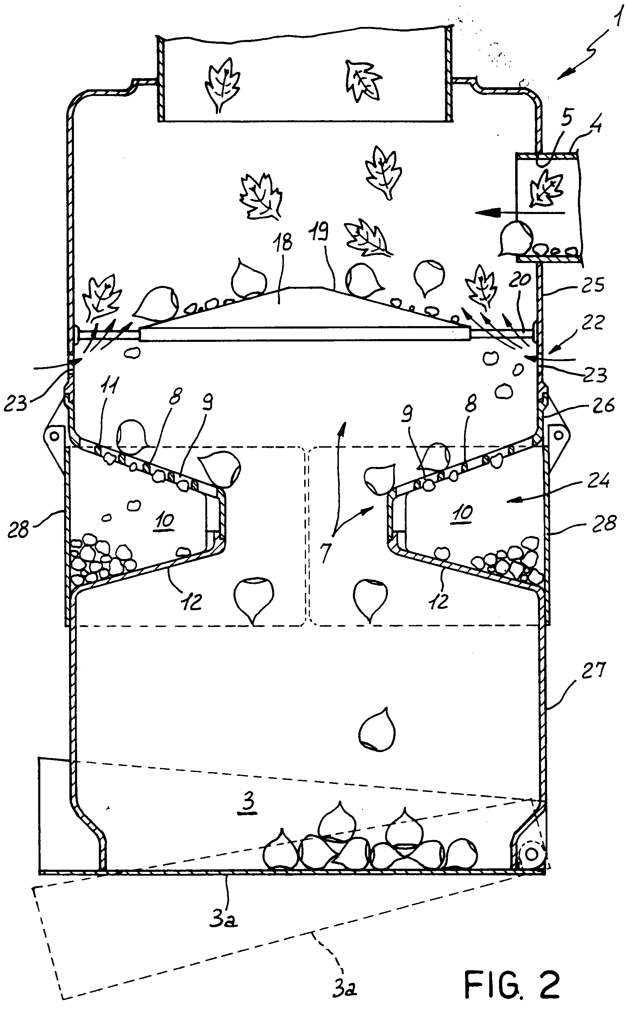

Turning now to the solution shown in Figs. 2 and 5, it is to be noted that in this case the grating element 8 is, in contrast, formed at an upper half of an annular recess 24 defined by the side wall of housing 2. Therein, from a construction point of view the housing will be formed of an upper portion 25 to which a central portion 26 exactly defining the grating element is joined, said central portion being consecutively associated, at the lower part thereof, with a lower portion 27 defining the collecting receptacle 3 in cooperation with the closure member 3a.

In accordance with this second solution, doors 28 for closing the annular recess are provided, and they are each defined by a partition the shape of which substantially matches that of the outer surface of the side wall. These doors can be of any angular extension and, in this case, they extend over 180° so that only two doors are needed for closing the whole annular recess.

The closing doors are shiftable from a first position, in which they are disposed close to the annular recess to define the separation space 10, and an open position, in which they are spaced apart from the annular recess to enable discharge of undesired bodies to the outside.

In this case too, drive means 29 capable of moving the doors between the first and second operating positions is provided. In particular, the drive means comprises at least one cable 32 having a first portion joined to a respective one of said doors and a second portion fixedly connected to gripping means 30, consisting of a handgrip for example, operable by the user. Also provided is spring return means 31 active on the cable to hold doors normally to the first operating position in which they are closed. In the embodiment shown a single cable or cord 32 is provided and it operates following an endless path and slidably engaging an element 34 integral with the gripping means 30, a first loop 33a integral with one of the two doors 28, a free end of said spring 31 and a second loop 33b integral with the other of said doors 28 (see Fig. 5).

The other features of the second embodiment of the device in accordance with the invention referred to in Figs. 2 and 5 are similar to those already described in connection with the first embodiment and therefore they are identified by the same reference numerals as the first embodiment and are not repeated herein.

It is to be pointed out that in both embodiments the collecting area is defined at a housing bottom with which, as already briefly mentioned, at least one closure member 3a is operatively associated, which member is shiftable between an open condition, in which it defines the collecting area itself in cooperation with a lower portion 2a of the housing 2 side wall, and an open condition in which it enables the collected products to be discharged. Opening and closure of the closure member is carried out through a drive lever (not shown) for example, which is manually operable by the user. Preferably, the closure member is made up of two halves oscillatably engaged at a lower edge of the housing side wall.

Operation of the sucking device described above mainly as regards structure, is as follows.

The products to be picked pass through the feeding channel and reach the interior of housing 2 through the inlet opening 5. Obviously, during the suction step also undesired bodies of a mass similar to that of the products to be picked are swallowed, such as gravel, stones and debris and also relatively light-in-weight bodies like grass, powder, earth and leaves. Once in the housing, the sucked material is impinged on by the air stream from the auxiliary openings 23 disposed preferably below the inlet opening 5. This air stream directed transversely to the picked material causes movement of substantially the whole light material towards the fan of the generator means 6 and then to the outside. Thus a substantial cleaning of the products to be collected takes place so that they are free of leaves, powder, earth and the like. Obviously, bodies of greater mass than the products to be collected, much as stones or gravel, cannot be removed and they may be diverted by the active surface 19 of the diverting member 18 so that they reach the grating element 8 and, passing through orifices 9, fall down into the separation spaces 10. The products to be picked, such as chestnuts, hazelnuts and the like that have greater volumes than stones or gravel, the mass being the same, are in contrast diverted by the grating element and pass to the collecting receptacle 3 at the bottom of the housing. If discharge of undesired bodies is wished, it is sufficient to act on handgrip 17, 30 to cause simultaneous opening of the closing doors of the separation spaces.

Finally, if discharge of the products is to be carried out, the drive lever of the closure member 3a can be acted upon so as to cause said products to go out.

The invention achieves important advantages.

First of all, it is to be pointed out that the sucking device in question reaches the previously specified aims, thereby ensuring an efficient separation of the products to be collected from foreign bodies such as stones, gravel, leaves or others without reducing the picking rates or involving particular construction complexities.

It should be also recognized that the device is particularly efficient in eliminating flying bodies, due to the presence of the auxiliary air-feeding means.

Also advantageous is the presence of the diverting member giving the sucked material an optimal trajectory capable of maximizing the effect of the auxiliary air-feeding means and make the grating elements particularly efficient.

It is also important to point out that, due to the particular conformation and arrangement of the different parts forming the device in question, elimination of undesired bodies takes place substantially under gravity without therefore causing additional energy consumption.

Very practical and efficient in operation is also the drive means for opening of doors; actually, due to its operating simplicity and efficiency, this means ensures a great reliability in time.

## Claims

1. A sucking device for picking products such as chestnuts and hazelnuts comprising:
- a housing (2) defining at least one collecting receptacle (3) at the bottom of said housing for receiving said products;
- a feeding channel (4) operatively associated with the housing at an inlet opening (5) in the upper part of said housing and capable of drawing in said products and sending them to said collecting receptacle (3);
- generator means (6) for causing a suction stream through said feeding channel (4);
- selector means (7) operatively interposed between said inlet opening (5) of housing (2) and the collecting receptacle (3) to separate said products from undesired bodies possibly sucked by the feeding channel (4) said selector means (7) including a grating element (8) located between said inlet opening (5) and said collecting receptacle (3),
characterized in that the device comprises auxiliary air-feeding means (22) adapted to operate at the side wall of the housing (2), close to the inlet opening (5), to define an auxiliary air stream transversely passing through the flow of said products and undesired bodies entering said housing (2) for separating light-in-weight undesired bodies from said products.

2. A sucking device according to claim 1, characterized in that said grating element (8) is provided with shaped orifices (9) so as to enable a selective passage of remaining undesired bodies to a separation space (10), said grating elements (8) simultaneously diverting said products towards the collecting receptacle (3).

3. A sucking device according to claim 2, characterized in that said grating element (8) comprises a predetermined number of portions engaged with the side wall of housing (2) and disposed in side by side relation with respect to each other.

4. A sucking device according to claim 3, characterized in that each of said portions of the grating element is disposed over a respective separation space (10).

5. A sucking device according to claim 4, characterized in that each of said separation spaces is defined by a partition (12) having an operating edge (12a) connected to the housing side wall.

6. A sucking device according to claim 5, characterized in that discharge openings (13) are provided and they are formed on the housing side wall in register with said separation spaces (10), said openings being provided with respective doors (14) each shiftable from a closure position to an open position to enable discharge of undesired bodies present in the separation space (10).

7. A sucking device according to claim 1, characterized in that said selector means (7) comprises a diverting member (18) having an active surface (19) disposed above said grating element (8) to cause movement of the products and undesired bodies coming from the feeding channel (4) towards said grating element (8).

8. A sucking device according to claim 7, characterized in that the active surface (19) of the diverting member (18) has a divergent conformation from top to bottom, said diverting member defining with the housing (2) a perimetric passage (20) for said products and undesired bodies which extends substantially in superposed relationship with said grating element (8).

9. A sucking device according to claim 6, characterized in that drive means is provided for opening and closing said doors, which means comprises:
- a predetermined number of cables (16) each having one end fixed to a corresponding door (14);
- a gripping element (17) operable by pulling by a user and rigidly connected to the second end of each of said cables (16).

10. A sucking device according to claim 1, characterized in that said collecting receptacle (3) is defined at the bottom of housing (2) with which at least one closure member (3a) is operatively associated, said closure member being shiftable from a closure condition in which it defines the collecting area, to an opening condition in which it enables said products to be discharged.

11. A sucking device according to claim 2, characterized in that said housing (2) comprises a side wall defining an annular recess (24), said grating element being provided at an upper half of the annular recess itself.

12. A sucking device according to claim 11, characterized in that it comprises closing doors (28) for said annular recess (24), each defined by a partition the shape of which substantially matches the outer surface of said housing (2) side wall, these closing doors being shiftable between a first position, in which they are disposed close to the annular recess (24) to define said separation space (10), and an open position, in which they are spaced apart from the annular recess (24), to enable discharge of said undesired bodies to the outside.

13. A sucking device according to claim 12, characterized in that it comprises drive means for moving the closing doors (28) between said first and second operating positions, said drive means comprising:
- a predetermined number of cables (32) fixed to a respective one of said doors;
- gripping means (30) rigidly connected to said cables; and
- spring return means (31) operatively active on said cables to hold said doors normally in said first operating position in which they are closed.

14. A sucking device according to claim 7, characterized in that said auxiliary air-feeding means (22) comprises a predetermined number of openings (23) formed in the side wall of said housing (2) and extending circumferentially over a predetermined area preferably located below said active surface (19) of the diverting member (18).

15. A sucking device according to claim 2, characterized in that the grating element (8) is slanting downwardly and is preferably defined by rungs (11) parallelly spaced apart from each other and placed at differentiated heights in a stepwise configuration, so as to divert the undesired bodies towards the separation space while at the same time letting the products fall towards the collecting receptacle.

## Patentansprüche

1. Saugvorrichtung zum Sammeln von Produkten wie Kastanien, Haselnüsse, umfassend:
- ein Gehäuse (2), das mindestens eine Sammelaufnahme (3) am Gehäuseboden zur Aufnahme der Produkte festlegt;
- einen Zufuhrkanal (4), der dem Gehäuse im Bereich einer Eintrittsöffnung (5) im oberen Teil des Gehäuses wirksam zugeordnet und fähig ist, die Produkte aufzufangen und sie in Richtung der Sammelaufnahme (3) zu leiten;
- Erzeugermittel (6) zur Erzeugung eines Saugstromes durch den Zufuhrkanal (4);
- Sortiermittel (7), die wirksam zwischen der Eintrittsöffnung (5) des Gehäuses (2) und der Sammelaufnahme (3) geschaltet sind, um die Produkte von unerwünschten, eventuell durch den Zufuhrkanal angesaugten Körpern zu trennen, wobei die Sortiermittel (7) ein Gitterelement (8) umfassen, das zwischen der Eintrittsöffnung (5) und der Sammelaufnahme (3) liegt,
dadurch gekennzeichnet, daß die Saugvorrichtung Luftzufuhrhilfsmittel (22) umfaßt, die im Bereich der Seitenwand des Gehäuses (2) in der Nähe der Eintrittsöffnung (5) wirken, um einen Hilfsluftstrom festzulegen, der den Strom von Produkten und unerwünschten, in das Gehäuse (2) eintretenden Körpern durchquert, um von den Produkten die unerwünschten, leichten Körper zu trennen.

2. Saugvorrichtung nach Anspruch 1, dadurch gekennzeichnet, daß das Gitterelement (8) mit Formöffnungen (9) derart versehen ist, daß der selektive Durchgang der unerwünschten, restlichen Körper in Richtung eines Trennraumes (1) ermöglicht wird, wobei das Gitterelement (8) gleichzeitig die Produkte in Richtung der Sammelaufnahme (3) ablenkt.

3. Saugvorrichtung nach Anspruch 2, dadurch gekennzeichnet, daß das Gitterelement (8) eine vorgegebene Anzahl von Abschnitten umfaßt, die an der Seitenwand des Gehäuses (2) angreifen und zu einander anliegend angeordnet sind.

4. Saugvorrichtung nach Anspruch 3, dadurch gekennzeichnet, daß jeder der Abschnitte des Gitterelementes oberhalb eines entsprechenden Trennraumes (10) angeordnet ist.

5. Saugvorrichtung nach Anspruch 4, dadurch gekennzeichnet, daß jeder der Trennräume durch eine Schottwand (12) festgelegt ist, die einen wirksamen Rand (12a) besitzt, der mit der Seitenwand des Gehäuses verbunden ist.

6. Saugvorrichtung nach Anspruch 5, dadurch gekennzeichnet, daß Entladeöffnungen (13) vorgesehen sind, die an der Seitenwand des Gehäuses im Bereich der Trennräume ausgenommen sind, wobei diese Entladeöffnungen mit entsprechenden Luken (14) versehen sind, die von einer Schließstellung in eine Offenstellung verstellbar sind, um das Ausladen der unerwünschten, in den Trennräumen (10) vorhandenen Körper zu ermöglichen.

7. Saugvorrichtung nach Anspruch 1, dadurch gekennzeichnet, daß die Sortiermittel (7) ein Ablenkorgan (18) umfassen, das eine aktive Oberfläche (19) aufweist, die oberhalb des Gitterelementes (8) liegt, um die Bewegung der Produkte und der unerwünschten Körper zu bewirken, die vom Zufuhrkanal (4) in Richtung Gitterelement laufen.

8. Saugvorrichtung nach Anspruch 7, dadurch gekennzeichnet, daß die aktive Oberfläche (19) des Ablenkorganes (19) eine von oben nach unten auseinanderlaufende Ausbildung besitzt, wobei das Ablenkorgan mit dem Gehäuse (2) einen Durchgang (20) längs des Umfanges für die Produkte und die unerwünschten Körper festlegt, der sich im wesentlichen zum Gitterelement (8) übereinanderliegend abwickelt.

9. Saugvorrichtung nach Anspruch 6, dadurch gekennzeichnet, daß zum Öffnen und Schließen der Luken Betätigungsmittel vorgesehen sind, die umfassen:
- eine vorgegebene Anzahl von Kabeln (16) von denen jedes ein erstes Ende aufweist, das an einer entsprechenden Luke (14) angreift;
- ein Greifelement, das durch einen Benutzer durch Zug betätigbar ist und mit einem zweiten Ende eines jeden der Kabel (16) starr verbunden ist.

10. Saugvorrichtung nach Anspruch 1, dadurch gekennzeichnet, daß die Sammelaufnahme (3) im Bereich eines Bodens des Gehäuses (2) festgelegt ist, dem wirksam mindestens ein Verschlußorgan (3a) zugeordnet ist, das von einer Schließstellung in der es einen Sammelbereich festlegt, in eine Offenstellung verstellbar ist, in der es das Entladen der Produkte erlaubt.

11. Saugvorrichtung nach Anspruch 2, dadurch gekennzeichnet, daß das Gehäuse (2) eine, eine ringförmige Ausnehmung (24) festlegende Seitenwand umfaßt, wobei das Gitterelement im Bereich einer oberen Hälfte der ringförmigen Ausnehmung selbst ausgeführt ist.

12. Saugvorrichtung nach Anspruch 11, dadurch gekennzeichnet, daß sie Schließtüren (28) der ringförmigen Ausnehmung (24) umfaßt, die jeweils durch eine zur Seitenwand des Gehäuses (2) im wesentlichen gegenprofilierte Schottwand festgelegt sind, wobei die Schließtüren zwischen einer ersten Stellung, in der sie der ringförmigen Ausnehmung (24) zur Festlegung des Trennraumes (10)angenähert sind, und einer Offenstellung verstellbar sind, um das Ausladen der unerwünschten Körper nach außen zu erlauben.

13. Saugvorrichtung nach Anspruch 12, dadurch gekennzeichnet, daß sie Betätigungsmittel zur Verstellung der Schließtüren (28) zwischen der ersten und zweiten Arbeitsstellung umfaßt, wobei die Betätigungsmittel umfassen:
- eine vorgegebene Anzahl von Kabeln (32), die an einer entsprechenden Tür angreifen;
- Greifmittel (30), die mit den Kabeln starr verbunden sind; und
- Federrückstellmittel (31), die auf die Kabel einwirken, um die Türen normalerweise in der ersten Arbeitsstellung zu halten, wo sie geschlossen sind.

14. Saugvorrichtung nach Anspruch 7, dadurch gekennzeichnet, daß die Luftzufuhrhilfsmittel (22) eine vorgegebene Anzahl von Öffnungen umfassen, die an der Seitenwand des Gehäuses (2) ausgenommen sind und sich längs des Umfangs an einem vorgegebenen Bereich abwickeln, der bevorzugterweise unterhalb der aktiven Oberfläche (19) des Ablenkorgans (18) angeordnet ist.

15. Saugvorrichtung nach Anspruch 2, dadurch gekennzeichnet, daß das Gitterelement (8) nach unten geneigt und bevorzugterweise durch Sprossen (11) festgelegt ist, die voneinander parallel beabstandet sind und an unterschiedlichen Höhen gemäß einer Stufenausbildung derart angeordnet sind, daß die unerwünschten Körper in Richtung des Trennraums gelenkt werden, wobei gleichzeitig die Produkte in Richtung der Sammelaufnahme fallen gelassen werden.

## Revendications

1. Dispositif aspirateur pour le ramassage de produits tels que châtaignes et noisettes, comprenant:
- un corps conteneur (2) définissant au moins un récipient de collecte (3) au fond dudit corps conteneur pour recevoir lesdits produits;
- un canal d'amenée (4) associé de manière opérationnelle au corps conteneur en correspondance d'une ouverture d'entrée (5) à la partie supérieure dudit corps conteneur et en mesure d'attirer lesdits produits et les envoyer audit récipient de collecte (3);
- des moyens générateurs (6) pour causer un écoulement d'aspiration à travers ledit canal d'amenée (4);
- des moyens sélecteurs (7) interposés de manière opérationnelle entre ladite ouverture d'entrée (5) du corps conteneur (2) et le récipient de collecte (3) pour effectuer la séparation entre lesdits produits et des corps non-désirés éventuellement aspirés par le canal d'amenée (4), lesdits moyens sélecteurs (7) comprenant un élément (8) formant grillage situé entre ladite ouverture d'entrée (5) et ledit récipient de collecte (3),
caractérisé en ce que le dispositif comporte des moyens auxiliaires d'amenée d'air (22) destinés à opérer en correspondance de la paroi latérale du corps conteneur (2), à proximité de l'ouverture d'entrée (5), pour définir un écoulement d'air auxiliaire traversant transversalement l'écoulement desdits produits et corps non-désirés entrant dans ledit corps conteneur (2) pour effectuer la séparation entre lesdits produits et les corps non-désirés légers.

2. Dispositif aspirateur selon la revendication 1, caractérisé en ce que ledit élément formant grillage (8) est pourvu d'orifices conformés (9) en mesure de permettre un passage sélectif des corps non-désirés restants vers un espace de séparation (10), ledit élément formant grillage (8) détournant en même temps lesdits produits vers le récipient de collecte (3).

3. Dispositif aspirateur selon la revendication 2, caractérisé en ce que ledit élément formant grillage (8) comporte un nombre prédéterminé de portions engagées avec la paroi latérale du corps conteneur (2) et disposées côte à côte les unes par rapport aux autres.

4. Dispositif aspirateur selon la revendication 3, caractérisé en ce que chacune desdites portions de l'élément formant grillage est disposée au-dessus d'un espace de séparation respectif (10).

5. Dispositif aspirateur selon la revendication 4, caractérisé en ce que chacun desdits espaces de séparation est défini par une cloison (12) ayant un bord opérationnel (12a) relié à la paroi latérale du corps conteneur.

6. Dispositif aspirateur selon la revendication 5, caractérisé en ce qu'on prévoit des ouvertures de déchargement (13) formées dans la paroi latérale du corps conteneur en correspondance desdits espaces de séparation (10), lesdites ouvertures étant pourvues de portes respectives (14) chacune desquelles est déplaçable d'une position de fermeture à une position ouverte pour permettre le déchargement de corps non-désirés présents dans l'espace de séparation (10).

7. Dispositif aspirateur selon la revendication 1, caractérisé en ce que lesdits moyens sélecteurs (7) comportent un organe déviateur (18) ayant une surface active (19) disposée au-dessus dudit élément formant grillage (8) pour causer le mouvement des produits et des corps non-désirés en provenance du canal d'amenée (4) vers ledit élément formant grillage (8).

8. Dispositif aspirateur selon la revendication 7, caractérisé en ce que la surface active (19) de l'organe déviateur (18) a une conformation divergente de haut en bas, ledit organe déviateur définissant avec le corps conteneur (2) un passage périmétral (20) pour lesdits produits et corps non-désirés qui s'étend essentiellement de manière à recouvrir ledit élément formant grillage (8).

9. Dispositif aspirateur selon la revendication 6, caractérisé en ce qu'on prévoit des moyens de commande pour ouvrir et fermer lesdites portes, ces moyens comprenant:
- un nombre prédéterminé de câbles (16) ayant chacun une extrémité fixée à une porte correspondante (14);
- un élément de préhension (17) à actionner par traction par un utilisateur et relié rigidement à la seconde extrémité de chacun desdits câbles (16).

10. Dispositif aspirateur selon la revendication 1, caractérisé en ce que ledit récipient de collecte (3) est défini au fond du corps conteneur (2) auquel est associé de manière opérationnelle au moins un organe de fermeture (3a), ledit organe de fermeture étant déplaçable d'une condition de fermeture dans laquelle il définit la zone de collecte, à une condition ouverte dans laquelle il permet le déchargement desdits produits.

11. Dispositif aspirateur selon la revendication 2, caractérisé en ce que ledit corps conteneur (2) comporte une paroi latérale définissant un renfoncement annulaire (24), ledit élément formant grillage étant prévu en correspondance d'une moitié supérieure du renfoncement annulaire lui-même.

12. Dispositif aspirateur selon la revendication 11, caractérisé en ce qu'il comporte des portes de fermeture (28) pour ledit renfoncement annulaire (24), chacune définie par une cloison dont la forme essentiellement épouse la surface extérieure de ladite paroi latérale du corps conteneur (2), ces portes de fermeture étant déplaçables entre une première position, dans laquelle elles sont disposées à proximité du renfoncement annulaire (24) pour définir ledit espace de séparation (10), et une position ouverte, dans laquelle elles sont écartées du renfoncement annulaire (24) pour permettre le déchargement à l'extérieur desdits corps non-désirés.

13. Dispositif aspirateur selon la revendication 12, caractérisé en ce qu'il comporte des moyens de commande pour déplacer les portes de fermeture (28) entre lesdites première et deuxièmes positions de fonctionnement, lesdits moyens de commande comprenant:
- un nombre prédéterminé de câbles (32) fixés à une porte respective;
- des moyens de préhension (30) reliés rigidement auxdits câbles; et
- des moyens élastiques de rappel (31), actifs de manière opérationnelle sur lesdits câbles pour retenir normalement lesdites portes à ladite première position de fonctionnement dans laquelle elles sont fermées.

14. Dispositif aspirateur selon la revendication 7, caractérisé en ce que lesdits moyens auxiliaires d'amenée d'air (22) comportent un nombre prédéterminé d'ouvertures (23) formées dans la paroi latérale dudit corps conteneur (2) et s'étendant de manière circonférentielle sur une zone prédéterminée située de préférence au-dessous de ladite surface active (19) de l'organe déviateur (18).

15. Dispositif aspirateur selon la revendication 2, caractérisé en ce que l'elément formant grillage (8) est incliné vers le bas et est de préférence défini par des barreaux espacés parallèlement les uns des autres et placés à des hauteurs différenciées selon une configuration à étages, de manière à détourner les corps non-désirés vers l'espace de séparation, laissant en même temps tomber les produits vers le récipient de collecte.
